(19) Europäisches Patentamt

European Patent Office

Office européen des brevets

(11) **EP 0 895 001 B1**

(12) **EUROPÄISCHE PATENTSCHRIFT**

(45) Veröffentlichungstag und Bekanntmachung des Hinweises auf die Patenterteilung:
**29.05.2002   Patentblatt 2002/22**

(51) Int Cl.$^7$: **F16H 49/00**

(21) Anmeldenummer: **98114255.7**

(22) Anmeldetag: **30.07.1998**

(54) **Untersetzungsgetriebe**

Reduction gear

Réducteur de vitesse

(84) Benannte Vertragsstaaten:
**AT CH DE ES FR GB IT LI SE**

(30) Priorität: **01.08.1997   DE 19733497**

(43) Veröffentlichungstag der Anmeldung:
**03.02.1999   Patentblatt 1999/05**

(73) Patentinhaber: **IMS MORAT SÖHNE GmbH**
**D-78166 Donaueschingen (DE)**

(72) Erfinder: **Dold, Michael**
**78166 Donaueschingen (DE)**

(74) Vertreter: **Patentanwälte**
**Westphal, Mussgnug & Partner**
**Waldstrasse 33**
**78048 Villingen-Schwenningen (DE)**

(56) Entgegenhaltungen:
**DE-U- 29 614 738**

- **PATENT ABSTRACTS OF JAPAN vol. 014, no. 184 (C-0709), 13. April 1990 (1990-04-13) & JP 02 029436 A (RICOH CO LTD), 31. Januar 1990 (1990-01-31)**
- **MUSSER C W: "THE HARMONIC DRIVE" MACHINE DESIGN, 14. April 1960 (1960-04-14), Seiten 160-173, XP002031070 ISSN: 0024-9114**

**Beschreibung**

Die Erfindung betrifft ein Untersetzungsgetriebe gemäß dem Oberbegriff des Anspruchs 1.

Ein solches Getriebe zeigt z.B. das deutsche Gebrauchsmuster 296 14 738.9, auf das zum Zwecke der Offenbarung ausdrücklich bezug genommen wird.

Gegenüber anderen Wellgetrieben bzw. Harmonic-Drive-Getrieben wird nicht nur eine erheblich kostengünstigere Herstellungsmöglichkeit geschaffen, sondern es werden auch erheblich größere Variationsmöglichkeiten in der Ausführungsform geschaffen und insbesondere eine sehr kleine und kompakte Bauweise ermöglicht. Auch die Präzision der Drehbewegungsübertragung kann mit wesentlich einfacheren Mitteln erzielt werden. Es wird nämlich bei der erfindungsgemäßen Ausgestaltung des Getriebes in keinem Fall ein Rollen- oder Kugellager zwischen der Abrollbuchse und dem Antriebskern bzw. der diesen umschließenden Lagernabe benötigt.

Ein weiterer wichtiger Vorteil besteht darin, daß das Getriebe selbsthemmend ist, was bedeutet, daß kein auch noch so großes auf die Abrollbuchse ausgeübtes Drehmoment in der Lage ist, die Antriebswelle vor- oder rückwärts zu drehen. Gleichzeitig bedeutet das auch, daß die durch die Abrollbuchse in getrieblicher Verbindung stehende Arbeitswelle bei stillstehendem Getriebe bzw. stillstehendem Antrieb jeweils eine exakt definierte Winkellage einnimmt, die nur durch den Antrieb, d.h. durch eine entsprechende Verdrehung des Antriebskerns in der einen oder anderen Richtung verändert werden kann.

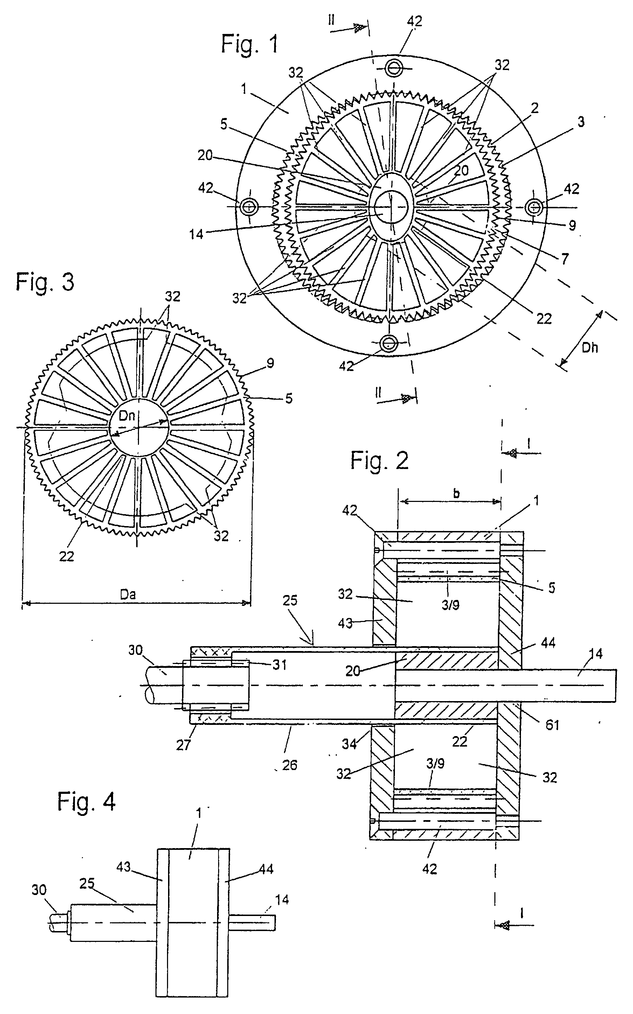

Grundbestandteil dieses Getriebes ist gemäß Figur 1 bis 4 jeweils ein kreisrunder Stützring 1 mit einer kreisförmigen inneren Stützfläche 2, eine Abrollbuchse 5 mit einer Außenmantelfläche 7 und ein elliptischer oder trianguläter Antriebskern 20 bzw. 20/1 bilden.

Beim Ausführungsbeispiel der Fig. 1, 2 und 3 ist der zylindrische Stützring 1 mit einer Innenverzahnung 3 versehen, die sich über seine gesamte Breite **b** erstreckt. Dieser Stützring 1 ist als feststehendes Getriebeteil undrehbar mit irgendeinem, in der Zeichnung nicht dargestellten, Getriebeträger oder dgl. verbunden. An seinen beiden planebenen Stirnflächen sind jeweils Stirnwände 43 und 44 angeordnet, die durch axiale Schrauben 42 miteinander bzw. mit dem Stützring 1 verbunden sind. In einer zentralen Bohrung 61 der Stirnwand 44 ist eine Antriebswelle 14 drehbar gelagert, die beispielsweise mit einem Antriebsmotor in Verbindung steht und von diesem in der einen oder anderen Drehrichtung angetrieben werden kann. Auf dieser Antriebswelle 14 ist der Antriebskern 20 drehsicher angeordnet, so daß sich auch der Antriebskern winkeltreu mit der Antriebswelle 14 dreht, wenn diese angetrieben wird.

Die in ihrer Grundform kreisrunde Abrollbuchse 5 ist mit einer Außenverzahnung 9 versehen, die beim Ausführungsbeispiel der Fig. 1 bis 3 die gleiche Breite **b** aufweist wie der Stützring 1 bzw. dessen Innenverzahnung 3. Diese Außenverzahnung 9 der Abrollbuchse 5 steht, wie aus Fig. 1 ersichtlich ist, im Bereich zweier sich diametral gegenüberliegender Umfangsabschnitte jeweils mit mehreren Zähnen in Eingriff mit der Innenverzahnung 3 des Stützringes 1. Dies ist deshalb möglich, weil die Abrollbuchse 5 radial flexibel ist und über radiale, in diesem Falle als Speichen 32 ausgebildete Übertragungsglieder mit einer inneren Lagerbuchse 22 einstückig verbunden ist, in welcher der Antriebskern 20 drehbar angeordnet ist.

Der Innendurchmesser $D_n$ bzw. die daraus resultierende innere Umfangslänge der Lagerbuchse 22 ist dabei so gewählt, daß sie im montierten Zustand gemäß Fig. 1 und 2 den elliptischen Antriebskern 20 zumindest annähernd spielfrei umschließt.

Der Innendurchmesser $D_n$, der in ihrer Grundform zylindrischen Lagernabe 22 ist wenigstens um ein Viertel bis ein Drittel kleiner als der Außendurchmesser $D_a$ der in ihrer Grundform ebenfalls zylindrischen Abrollbuchse 5. Bei dem in den Fig. 1 bis 3 dargestellten Ausführungsbeispiel bilden die Abrollbuchse 5 und die Lagernabe 22 mit den als Speichen 32 ausgebildeten Übertragungselementen ein einstückiges Bauteil 35 aus Kunststoff, das sehr kostengünstig herstellbar und auch leicht montierbar ist. Infolge der relativ hohen Elastizität, mit der die Lagernabe 22 dabei ausgestattet sein kann, läßt sich auch der unrunde Antriebskern 20 sehr leicht in die Lagernabe 22 einsetzen.

Durch die Drehbewegung des exzentrischen, d.h. elliptischen Antriebskerns 20 in der Lagerbuchse 22 wird diese laufend elliptisch verformt. Diese elliptische Verformung wird durch die Speichen 32 auch auf die Abrollbuchse 5 übertragen, so daß laufend andere Zähne der Außenverzahnung 7 der Abrollbuchse 5 mit der Innenverzahnung 3 des stillstehenden Stützringes 1 in Eingriff kommen.

Weil die Zähnezahl $Z_1$ der Außenverzahnung 9 der Abrollbuchse 5 kleiner ist als die Zähnezahl $Z_2$ der Innenverzahnung 3 des Stützringes 1, ergibt sich dabei eine fortlaufende Drehung der Abrollbuchse 5 gegenüber dem stillstehenden Stützring 1 und zwar in entgegengesetzter Drehrichtung zur Antriebswelle 14 bzw. zum Antriebskern 20.

Wie bereits eingangs erwähnt, errechnet sich die daraus resultierende Übersetzung zwischen der Drehzahl der Antriebswelle 14 und der Drehzahl der Abrollbuchse 5 nach folgender Formel:

$$i = \frac{Z_2}{Z_1 - Z_2}$$

Wenn beispielsweise die Abrollbuchse 5 die Zähnezahl $Z_1 = 98$ und der Stützring 1 die Zähnezahl $Z_2 = 100$ aufweist, so ergibt sich aus der vorstehenden Formel eine Übersetzung i=1:50.

Statt der Zähnezahlen kann man auch die Umfangslängen der Innenfläche 2 als $Z_2$ und die Umfangs-

länge der Außenmantelfläche 7 der Abrollbuchse 5 als $Z_1$ einsetzen, um zum selben Ergebnis zu kommen.

Es soll damit gesagt sein, daß zwischen dem Stützring 1 und der Abrollbuchse 5 nicht unbedingt ein Zahneingriff bestehen muß, daß es vielmehr auch möglich ist, das Getriebe als reines Reibgetriebe auszubilden, wie nachstehend noch näher beschrieben wird.

Wie aus Fig. 2 ersichtlich ist, weist die Lagernabe 22 als Verbindungsglied 25 eine in ihrer Grundform ebenfalls zylindrische, dünnwändige und elastisch verformbare Hohlwelle 26 auf, die über eine Innenverzahnung 27 mit einem Zahnritzel 31 einer Arbeitswelle 30 gekoppelt ist. Diese Hohlwelle 26 durchragt dabei mit ausreichend radialem Spiel eine entsprechend weite zentrale Axialbohrung 34 der Stirnwand 43.

Durch dieses Verbindungsglied 25 werden die Drehbewegungen der Abrollbuchse 5 bzw. der Lagerbuchse 22 auf die Arbeitswelle 30 übertragen.

Ausgehend von diesem bekannten Getriebe ist es Ziel der vorliegenden Erfindung, den Wirkungsgrad des Getriebes weiter zu verbessern.

Dies wird durch ein Getriebe mit den Merkmalen des Anpruchs 1 gelöst.

Weiterbildungen sind Gegenstand der Unteransprüche.

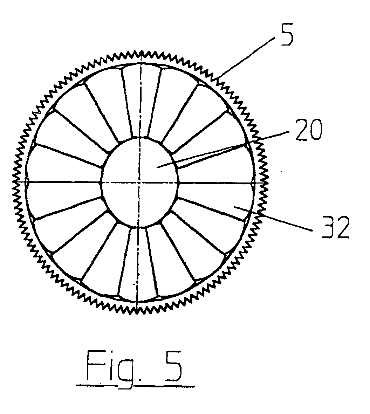

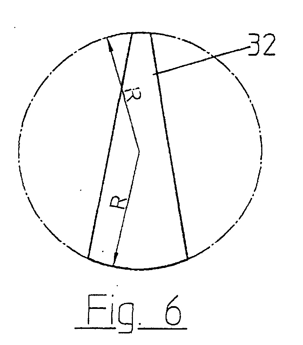

In den Figuren 5 und 6 ist die Erfindung näher skizziert.

Die Übertragungselemente 32 werden so als Kreissegmente gestaltet, daß mehrere nebeneinander gefügte Segmente den Hohlraum zwischen dem Antriebskern 20 und der Abrollbuchse 5 nahezu vollständig ausfüllen. Vorteil dieser Anordnung ist, daß die Segmente 32 unter Last in tangentialer Richtung nicht ausweichen können, da der Hohlraum nahezu vollständig ausgefüllt ist, jedoch die einzelnen Elemente 32 gegeneinander in radialer Richtung leicht verschiebbar sind und dadurch die Verformungsübertragung vom Antriebskern auf die Abrollbuchse möglichst verlustarm stattfindet (Fig.5).

Die Berührflächen zwischen Segment 32 und Antriebskern 20 sowie zwischen Segment 32 und Abrollbuchse 5 ist vorzugeweise so gestaltet, daß eine spielbedingte leichte Verkippung der Segment 32 keinen Einfluß auf den Abstand zwischen diesen Berührflächen hat. Dies kann dadurch geschehen, daß diese beiden Außenflächen den gleichen Krümmungsradius sowie den gleichen Krümmungsmittelpunkt haben (Fig. 6).

**Patentansprüche**

1. Untersetzungsgetriebe mit einem eine im wesentlichen zylindrische Stützfläche (2) aufweisenden starren Stützring (1) und mit einer radialflexiblen Abrollbuchse (5), die eine Außenmantelfläche (7) mit einer kleineren Umfangslänge als die Stützfläche (2) aufweist, wobei ein oder mehrere Umfangsabschnitte der Außenmantelfläche (7) durch einen innerhalb der Abrollbuchse (5) drehbar angeordneten und von einer Antriebswelle (14) drehend angetriebenen Antriebskern (20) über eine Vielzahl von Übertragungselementen (32) in fortlaufendem Wechsel mit der Stützfläche (2) des Stützrings (1) in im wesentlichen schlupffreiem Eingriff gehalten sind,

   **dadurch gekennzeichnet,**

   **daß** die Übertragungselemente (32) durch eine Vielzahl von im wesentlichen radial verlaufenden, unter sich gleich langen Kreissegmenten gebildet sind wobei die nebeneinander gefügten Segmente den Hohlraum zwischen dem Antriebskern (20) und der Abrollbuchse (5) nahezu vollständig ausfüllen, daß sich die Abrollbuchse über diese Kreissegmente auf dem Abtriebskern (20) abstützt, und daß die Kreissegmente mit ihren radialen Außenseiten flächig nebeneinanderliegen und gegeneinander radial verschiebbar sind.

2. Untersetzungsgetriebe nach Anpruch 1, **dadurch gekennzeichnet, daß** die Kreissegmente an ihrer äußeren und oder inneren Umfangsfläche einen im wesentlichen gleichen Krümmungsradius und /oder den gleichen Krümmungsmittelpunkt aufweisen.

3. Untersetzungsgetriebe nach Anpruch 1 oder 2, **dadurch gekennzeichnet, daß** die Kreissegmente aus Kunststoff gebildet sind.

4. Untersetzungsgetriebe nach Anpruch 1,2 oder 3, **dadurch gekennzeichnet, daß** die Kreissegmente von der Abrollbuchse (5) körperlich getrennt ausgebildet sind.

5. Untersetzungsgetriebe nach Anspruch 1, 2, 3 oder 4, **dadurch gekennzeichnet, daß** die Kreissegmente (32) den Hohlraum zwischen dem Antriebskern (20) und der Abrollbuchse (5) nahezu vollständig ausfüllen.

**Claims**

1. A reducing gear system having a rigid support ring (1) comprising a substantially cylindrical support face (2) and having a radially flexible rolling cup (5), which comprises an outer shell (7) with a smaller circumferential length than the support face (2), wherein one or more circumferential sections of the outer shell (7) are kept, while continuously changing, in essentially non-slip engagement with the support face (2) of the support ring (1) by an actuating core (20), which is rotatably mounted inside the rolling cup (5) and driven in rotation by a driving shaft (14), via a plurality of transmission elements (32),

**characterised in that** the transmission elements (32) are formed by a plurality of substantially radially extending circular segments of identical length, with the segments assembled next to one another almost completely filling the cavity between the actuating core (20) and the rolling cup (5), **in that** the rolling cup is supported via these circular segments on the actuating core (20), **and in that** the circular segments with their radial. outer sides lie flat next to one another are radially displaceable in relation to one another.

2. A reducing gear system according to Claim 1, **characterised in that** the circular segments comprise an essentially identical radius of curvature and/or the same centre of curvature on their outer and or inner circumferential face.

3. A reducing gear system according to Claim 1 or 2, **characterised in that** the circular segments are made from plastic.

4. A reducing gear system according to Claim 1, 2 or 3, **characterised in that** the circular segments are constructed physically separated from the rolling cup (5).

5. A reducing gear system according to Claim 1, 2, 3 or 4, **characterised in that** the circular segments (32) almost completely fill the cavity between the actuating core (20) and the rolling cup (5).


## Revendications

1. Engrenage démultiplicateur dans lequel :

   - une bague d'appui (1), rigide, présente une portée d'appui cylindrique (2),
   - une douille de roulement (5), flexible radialement, présente une portée externe (7) de longueur périphérique inférieure à celle de la portée d'appui (2),
   - par un noyau d'entraînement (20) monté en rotation à l'intérieur de la douille de roulement (5) et entraîné par un arbre d'entraînement (14), une ou plusieurs sections de la portée externe (7) sont maintenues en prise essentiellement sans glissement, avec la portée d'appui (2) de la bague d'appui (1) par l'intermédiaire de plusieurs éléments de transmission (32) s'échangeant entre eux en continu,

   **caractérisé en ce que**

   - les éléments de transmission (32) sont constitués par un certain nombre de segments en forme de secteurs circulaires disposés sensiblement radialement et de même longueur, ces segments joints côte à côte remplissant à peu près totalement l'espace vide entre le noyau d'entraînement (20) et la douille de roulement (5), et
   - la douille de roulement s'appuie sur le noyau d'entraînement (20) par ces segments qui sont en contact entre eux à plat par leurs côtés radiaux et peuvent coulisser radialement les uns par rapport aux autres.

2. Engrenage démultiplicateur selon la revendication 1, **caractérisé en ce que** les segments ont leurs surfaces périphériques externes et/ou internes qui présentent le même rayon de courbure et/ou le même centre de courbure.

3. Engrenage démultiplicateur selon l'une quelconque des revendications 1 ou 2, **caractérisé en ce que** les segments sont en matière plastique.

4. Engrenage démultiplicateur selon l'une quelconque des revendications 1, 2 ou 3, **caractérisé en ce que** les segments sont physiquement séparés de la douille de roulement (5).

5. Engrenage démultiplicateur selon l'une quelconque des revendications 1, 2, 3, ou 4 **caractérisé en ce que** les segments circulaires (32) remplissent à peu près totalement le volume creux compris entre le noyau d'entraînement (20) et la douille de roulement (5).

Fig. 1

Fig. 3

Fig. 2

Fig. 4

Fig. 5

Fig. 6